# EUROPÄISCHE PATENTSCHRIFT

(11) **EP 1 055 802 B1**
(45) Veröffentlichungstag und Bekanntmachung des Hinweises auf die Patenterteilung: **15.12.2004**
(21) Anmeldenummer: 00109397.0
(22) Anmeldetag: 03.05.2000
(51) Int. Cl.: F01L 7/02, F01L 7/16

(54) **Drehschieber zur Ladungssteuerung einer Brennkraftmaschine**
Rotary valve for internal combustion engine
Valve rotative pour moteur à combustion interne

(30) Priorität: 27.05.1999 DE 19924396
(43) Veröffentlichungstag der Anmeldung: 29.11.2000
(73) Patentinhaber: Bayerische Motoren Werke Aktiengesellschaft, 80809 München (DE)
(72) Erfinder: Semet, Wolfgang, 85256 Vierkirchen (DE); Schmötzer, Markus, 85598 Baldham (DE)

(56) Entgegenhaltungen:
- DE-A- 19 626 857
- DE-A- 19 815 739
- FR-A- 2 587 755
- US-A- 3 192 914
- US-A- 4 658 776
- PATENT ABSTRACTS OF JAPAN vol. 009, no. 319 (M-439), 14. Dezember 1985 (1985-12-14) & JP 60 153412 A (MITSUBISHI JIDOSHA KOGYO KK), 12. August 1985 (1985-08-12)

## Beschreibung

Die Efindung geht nach dem Oberbegriff des unabhängigen Patentanspruches vom Gegenstand der gattungsbildenden US 5 749 335 A aus.

Dieses Dokument zeigt und beschreibt einen Drehschieber zur Ladungssteuerung einer Brennkraftmaschine, wobei der mit einer Steueröffnung einen zuströmseitigen mit einem abströmseitigen Abschnitt eines Einlasskanals verbindende Drehschieber mit einer abströmseitig angeordneten Abdichtanordnung zusammenwirkt. Ferner ist der Steueröffnung im Drehschieber abströmseitig ein durch einen Schlitz kanalartig ausgebildeter Leerlaufluft - Bypass zugeordnet, wobei der von einem Außenumfangsabschnitt des Drehschiebers quer zur Steueröffnung verlaufend angeordnete Schlitz bzw. Bypass mit der Steueröffnung über eine unterbrochen ausgebildete Steuerkante des Drehschiebers in Verbindung steht.
Dem im Drehschieber abströmseitig angeordneten Bypass ist zuströmseitig eine Zuströmbohrung in dem in Leerlaufstellung den zuströmseitigen Abschnitt des Einlasskanals sperrenden Teil des Drehschiebers zugeordnet. Weiter ist in dem in Leerlaufstellung den abströmseitigen Abschnitt des Einlasskanals sperrenden anderen Teil des Drehschiebers zusätzlich zum oben genannten Bypass eine Abströmbohrung vorgesehen zur Erzielung eines besseren Überganges vom Leerlaufbetrieb zum Lastbetrieb der Brennkraftmaschine.

Der vorbeschriebene Drehschieber ist fertigungsaufwändig, insbesondere mit einem zur besseren Gemischbildung außermittig zur Mittendrehebene des Drehschiebers versetzt angeordneten Bypass von kanalartiger Gestaltung.

Aus der nachveröffentlichten DE 198 15 739 A1 ist eine für eine Brennkraftmaschine zur Ladeluftsteuerung dienende Walzenschieber-Anordnung bekannt, bei der dem in einem Gehäuse drehbar gelagerten Walzenschieber zuströmseitig eine Abdichtanordnung zugeordnet ist. Weiter ist dem Walzenschieber im Gehäuse ein koaxialer Umfangsspalt zugeordnet, über den bei sperrender Leerlaufstellung des Walzenschiebers über die Abdichtanordnung Leckageluft für den Leerlaufbetrieb der Brennkraftmaschine zugeführt ist. Diese gattungsfremde Walzenschieber- Anordnung weist nämlich keine gesonderte Leerlauf- Bypass- Einrichtung auf.
Nachteilig hierbei ist, dass mit einer Drehung des Walzenschiebers aus der geschlossenen Stellung bereits durch kleine Drehänderungen große Querschnitte im Einlasskanal freigegeben werden, wodurch eine stabile Leerlaufdrehzahlregelung von Serien- Verbrennungsmotoren durch die steile Progression des freien Querschnitts über dem Verstellwinkel des Walzenschiebers nicht möglich ist.

Der Erfindung liegt die Aufgabe zugrunde, den gattungsgemäßen Drehschieber zur Erzielung eines stabilen Leerlaufes der Brennkraftmaschine mittels eines geringeren Bau- bzw. Fertigungsaufwandes bei reduzierten Kosten zu verbessern.

Diese Aufgabe ist mit dem Patentanspruch 1 gelöst.

Mit der geglückten Kombination von Merkmalen aus beiden vorbeschriebenen Dokumenten ist in überraschend vorteilhaft einfacher Weise ein Drehschieber von reduziertem Fertigungsaufwand erzielt, was mit der im abhängigen Patentanspruch 2 angegebenen konkreten Ausgestaltung des Leerlauf - Bypasses vorteilhaft unterstützt ist.

Der Vorteil dieser Ausgestaltung in Kombination mit dem zum Drehschieber im wesentlichen koaxialen Umfangsspalt im Drehschieber - Gehäuse ergibt einen einwandfreien Übergang vom Leerlaufbetrieb zum Lastbetrieb der Brennkraftmaschine, wobei ein rasch ansteigender Querschnittszuwachs über die Steueröffnung und damit ein instabiler Leerlauf vermieden ist.

Die Erfindung ist anhand eines in der Zeichnung dargestellten, bevorzugten Ausführungsbeispiels beschrieben.
- Figur 1: einen Drehschieber in Leerlaufstellung,
- Figur 2: diesen Drehschieber in Vollast-Stellung und
- Figur 3: den Drehschieber in Draufsicht.

Ein Drehschieber 1 einer nicht näher dargestellten Brennkraftmaschine 2 dient der Ladungssteuerung bzw. der Drosselung der Füllung, wobei der mit einer Steueröffnung 3 Abschnitte 4' und 4" eines Einlaßkanals 4 verbindende Drehschieber 1 mit einer Abdichtanordnung 5 zusammenwirkt.

Zur Erzielung eines stabilen Leerlaufs einer serienmäßigen Brennkraftmaschine 2 ist der Steueröffnung 3 im Drehschieber 1 erfindungsgemäß ein Leerlaufluft-Bypass 6 zugeordnet.

Wie aus den Figuren ersichtlich, ist zur Erzielung eines sauberen Überganges von der Leerlauf-Stellung zur anschließenden Laststellung des Drehschiebers 1 der Bypass 6 mit der Steueröffnung 3 über eine angepaßt unterbrochen ausgebildete Steuerkante 7 des Drehschiebers 1 verbunden, wodurch die Querschnitte von Bypass 6 und Steueröffnung 3 miteinander in Verbindung stehen.

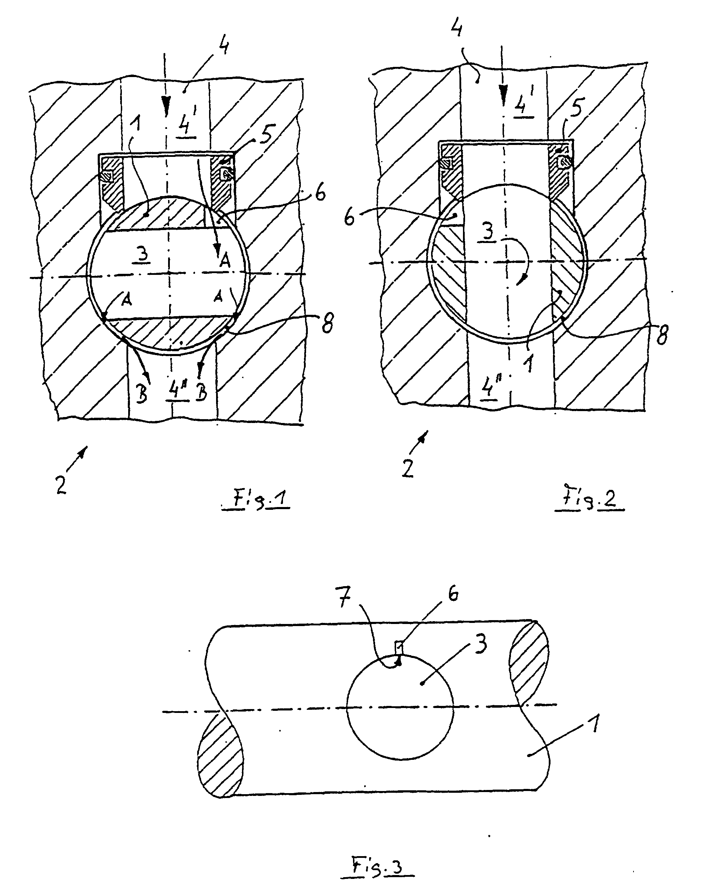

Für diese Ausgestaltung des Bypasses 6 ist bei einem vorzugsweise walzen- oder kugelförmigen Drehschieber 1 zur Steuerung eines Einlaßkanals 4 mit kreisförmigem Querschnitt in dessen zuströmseitigen Abschnitt 4' eine ringförmige Abdichtanordnung 5 angeordnet, wobei der Bypass 6 in Leerlaufstellung des Drehschiebers 1 gemäß Figur 1 bei geschlossener Steueröffnung 3 mit dem abströmseitigen Abschnitt 4" des Einlaßkanals 4 über einen mit der Steueröffnung 3 in Verbindung stehenden Umfangsspalt 8 zwischen Drehschieber 1 und einem Drehschieber-Gehäuse 9 leerlaufluftführend gemäß der Pfeile B verbunden ist.

Im Rahmen der Erfindung kann der Bypass von der Steueröffnung getrennt im Drehschieber angeordnet sein, wobei der gesonderte Bypass in Leerlaufstellung eines Walzen- oder Kugel-Drehschiebers über einen Umfangsspalt zwischen Drehschieber und einem Drehschieber-Gehäuse mit einem abströmseitigen Abschnitt des Einlaßkanals luftführend in Verbindung steht.

Mit dem erfindungsgemäß angeordneten Leerlaufluft-Bypass in einem vorzugsweise walzenförmigen Drehschieber ist es in vorteilhafter Weise möglich, ohne zusätzliche Bauteile und Vorrichtungen, wie z.B. ein separates Leerlaufdrehzahl-Regelsystem, eine stabile Leerlaufregelung einer Brennkraftmaschine zu erreichen, wobei Kosten, Bauaufwand und Platzbedarf reduziert sind.

## Patentansprüche

1. Drehschieber zur Ladungssteuerung einer Brennkraftmaschine,
- wobei der mit einer Steueröffnung (3) Abschnitte (4', 4") eines Einlaßkanals (4) verbindende Drehschieber (1) mit einer Abdichtanordnung (5) zusammenwirkt, und
- der Steueröffnung (3) im Drehschieber (1) ein Leerlaufluft - Bypass (6) zugeordnet ist,
**dadurch gekennzeichnet,**
- **dass** einem Walzen- oder Kugel-Drehschieber (1) die Abdichtanordnung (5) im zuströmseitigen Abschnitt (4') des Einlasskanals (4) zugeordnet ist, und
- der in Leerlaufstellung des Drehschiebers (1) zuströmseitig im Drehschieber (1) angeordnete Bypass (6) mit dem abströmseitigen Abschnitt (4") des Einlasskanals (4) über einen mit der Steueröffnung (3) in Verbindung stehenden Umfangsspalt (8) zwischen Drehschieber (1) und einem Drehschieber-Gehäuse (9) leerlaufluftführend verbunden ist.

2. Drehschieber nach Anspruch 1, **dadurch gekennzeichnet,**
- **dass** der Steueröffnung (3) im Drehschieber (1) ein kanalartiger Leerlaufluft- Bypass (6) zugeordnet ist, der
- mit der Steueröffnung (3) über eine unterbrochen ausgebildete Steuerkante (7) des Drehschiebers (1) in Verbindung steht.

## Claims

1. A rotary slide valve for controlling the charge of an internal combustion engine
- wherein the rotary slide valve (1), which connects portions (4' , 4'') of an intake manifold (4) via a control opening (3), cooperates with a sealing arrangement (5) and
- the control opening (3) in the valve (1) is associated with an idling air bypass (6),
**characterised in that**
- a roller or ball rotary slide valve (1) is associated with the sealing arrangement (5) in the inflow-side portion (4') of the intake manifold (4) and
- the bypass (6), disposed in the rotary slide valve (1) on the inflow side when the valve (1) is in the idling position, is connected for supplying idling air to the outflow-side portion (4'') of the intake manifold (4) via a peripheral gap (8) between the valve (1) and a valve casing (9) and connected to the control opening (3).

2. A valve according to claim 1, **characterised in that**
- the control opening (3) in the valve (1) is associated with a duct-like idling-air bypass (6) which
- is connected to the control opening (3) via an interrupted control edge (7) of the rotary slide valve (1).

## Revendications

1. Tiroir tournant pour la commande de la charge d'un moteur à combustion interne, dans lequel
- le tiroir tournant (1) qui relie par une ouverture de commande (3) des segments (4', 4") d'un conduit d'admission (4), coopère avec un dispositif d'étanchéité (5), et
- un bipasse d'air de ralenti (6) est associé à l'ouverture de commande (3) prévue dans le tiroir tournant (1),
**caractérisé en ce que**
- le dispositif d'étanchéité (5) est associé à un tiroir tournant en forme de tambour ou de sphère (1) dans le segment amont (4') du conduit d'admission (4) et,
- dans la position de ralenti du tiroir tournant (1), le bipasse (6) prévu côté amont dans le tiroir tournant (1) est relié, pour conduire l'air de ralenti, au segment aval (4") du conduit d'admission (4) par une fente périphérique (8) prévue entre le tiroir tournant (1) et un boîtier (9) du tiroir tournant qui est en communication avec l'ouverture de commande (3).

2. Tiroir tournant selon la revendication 1,
**caractérisé en ce qu'**
- à l'ouverture de commande (3) prévue dans le tiroir tournant (1), est associé un bipasse d'air de ralenti (6) en forme de canal, qui
- par une arête de commande (7) du tiroir tournant (1) de configuration interrompue est en communication avec l'ouverture de commande (3).
